# FASCICULE DE BREVET EUROPEEN

(11) **EP 0 867 960 B1**
(45) Date de publication et mention de la délivrance du brevet: **19.12.2001**
(21) Numéro de dépôt: 98400662.7
(22) Date de dépôt: 23.03.1998
(51) Int. Cl.: H01M 6/10, H01M 10/04

(54) **Générateur électrochimique à sécurité améliorée**
Elektrochemischer Generator mit verbesserter Sicherheit
Electrochemical generator with improved safety

(30) Priorité: 24.03.1997 FR 9703542; 23.10.1997 FR 9713287
(43) Date de publication de la demande: 30.09.1998
(73) Titulaire: ALCATEL, 75008 Paris (FR)
(72) Inventeur: Broussely, Michel, 86240 Liguge (FR); Flament, Pascal, 33000 Bordeaux (FR)
(74) Mandataire: Laroche, Danièle

(56) Documents cités:
- EP-A- 0 660 431
- EP-A- 0 666 608
- EP-A- 0 698 933
- WO-A-96/01505
- DE-B- 1 011 491
- DE-C- 4 241 037
- US-A- 3 119 722
- US-A- 4 074 023
- PATENT ABSTRACTS OF JAPAN vol. 097, no. 004, 30 avril 1997 -& JP 08 329958 A (FUJI ELELCTROCHEM CO LTD), 13 décembre 1996,
- PATENT ABSTRACTS OF JAPAN vol. 005, no. 141 (E-073), 5 septembre 1981 -& JP 56 078077 A (SHIN KOBE ELECTRIC MACH CO LTD), 26 juin 1981,
- PATENT ABSTRACTS OF JAPAN vol. 096, no. 007, 31 juillet 1996 & JP 08 064198 A (SHIP &OCEAN ZAIDAN; FUJI ELELCTROCHEM CO LTD), 8 mars 1996,

## Description

L'invention concerne un générateur électrochimique comprenant un conteneur contenant un faisceau électrochimique à électrodes spiralées, et au moins un dispositif de sécurité autorisant la sortie des gaz en cas d'élévation anormale de la pression interne à la suite d'un dysfonctionnement du générateur.

L'invention concerne tout type de générateur électrochimique à électrodes spiralées, notamment de forme cylindrique, primaire ou secondaire, comportant des matériaux réactifs susceptibles de produire des réactions fortement exothermiques. Elle vise toutes sorte d'applications, mais particulièrement les accumulateurs de grandes dimensions qui présentent un risque plus élevé car contenant une énergie plus importante.

Les générateurs électrochimiques sont constitués essentiellement par deux matériaux, l'un oxydant (électrode positive), l'autre réducteur (électrode négative). Ces matériaux réagissent entre eux pour fournir des produits de réaction et de l'énergie. En fonctionnement normal, la réaction électrochimique se produit par l'intermédiaire de l'électrolyte et l'énergie est récupérée sous forme électrique. La température d'un accumulateur peut s'élever accidentellement localement dans le cas par exemple d'un court-circuit électrique interne. Si la température locale de l'accumulateur devient trop élevée, par exemple supérieure à 250°C dans le cas d'un générateur au lithium, les matières peuvent réagir avec leur environnement de façon exothermique, avec une certaine vitesse dépendant de la température et de la pression. Dans le cas le plus défavorable, si la chaleur produite ne peut être évacuée rapidement, on obtient un phénomène d'emballement thermique, et la combustion complète de l'accumulateur en un temps plus ou moins rapide. Cette dernière réaction peut être très rapide, et produire une quantité de gaz importante, conduisant à l'éclatement (souvent qualifiée d'explosion) de l'enveloppe métallique de l'accumulateur si celle ci n'est pas munie d'évent de sécurité. Il faut dans ce cas faire en sorte que, si l'emballement thermique se produit, la vitesse de réaction soit la plus faible possible, notamment en évitant que la pression ne soit trop élevée au niveau du front de réaction, et que l'évacuation des gaz par l'évent de sécurité soit la plus facile possible.

Les solutions de l'art antérieur appliquées aux générateurs électrochimiques ne concernent que des affaiblissements dans l'enveloppe externe, ayant pour but de s'ouvrir à une pression déterminée, plus faible que l'éclatement de l'enveloppe elle même.

Ainsi, le document FR-A-2 627 327 montre un dispositif constitué d'une rainure en forme de V pratiquée sur le fond du conteneur accompagnée d'un amincissement de la paroi. Une soupape de sécurité est située à l'extrémité (ou aux extrémités) du faisceau spiralé, dans le couvercle ou fond du conteneur. En cas de combustion des électrodes à mi-hauteur du bobineau, les gaz produits ne peuvent être évacués. La pression monte fortement, ce qui accélère les réactions chimiques et la combustion des électrodes. La situation devient catastrophique et peut entraîner l'éclatement de l'enveloppe, l'évent n'étant pas suffisant pour évacuer la quantité de gaz émise.

Selon le document EP-A-0 305 880, une ligne d'affaiblissement décrivant une langue multiple est ménagée sur le fond du conteneur.

Dans le document WO-A-82/02117, la pile alcaline au manganèse décrite possède deux enveloppes, l'enveloppe interne étant étanche. L'enveloppe externe peut comporter des nervures sur sa face interne.

Enfin, le document JP-A-60 200 56 décrit une pile alcaline cylindrique comportant une soupape de sécurité et une nervure à profil en V constituant une zone d'affaiblissement.

Dans l'ensemble de ces documents, rien n'est décrit pour faciliter la collecte des gaz au sein du générateur électrochimique et leur acheminement à proximité du dispositif d'évacuation. Or, en particulier lorsque le générateur est de grande taille, les gaz produits à une vitesse très grande lors d'une combustion, au niveau du front de réaction (électrodes) ne peuvent être évacués facilement au travers du faisceau d'électrodes spiralées lui-même, compte tenu de la géométrie de celui-ci. C'est particulièrement le cas dans les générateurs de forme cylindrique (généralement à base circulaire, mais non nécessairement), car l'enveloppe très résistante mécaniquement ne se déforme pas sous l'action de la pression, comme cela peut être le cas pour un générateur de forme prismatique.

Il est à noter que le document EP-A-0 244 281 décrit un condensateur électrochimique dans lequel le diamètre de la partie active (bobine) est plus faible que le diamètre intérieur de l'enveloppe. La bobine est libre et n'est retenue dans l'enveloppe que par ses connexions, ce qui est exclu pour une pile ou un accumulateur, compte tenu de la masse volumique plus importante des électrodes et les contraintes de résistance aux vibrations et chocs. De plus, dans le cas du condensateur, il n'y a pas d'électrolyte, et les électrodes sont solidaires l'une de l'autre par l'intermédiaire d'une résine. Ce n'est pas le cas d'un générateur électrochimique, qui nécessite une enveloppe qui maintienne les électrodes en place. Enfin, ce document qui préconise de remplir le conteneur de résine solidifiée, ne dit pas comment ménager dans ces conditions un espace d'échappement des gaz.

Le but de l'invention est de proposer un générateur électrochimique à électrolyte non-aqueux et électrodes spiralées permettant en cas de disfonctionnement une évacuation des gaz plus facile et plus rapide, c'est-à-dire finalement une sécurité accrue pour l'utilisateur.

L'invention a pour objet un générateur électrochimique étanche à électrolyte non-aqueux comprenant un conteneur (2) contenant un faisceau électrochimique spiralé (4) et au moins un dispositif de sécurité en cas de disfonctionnement provoquant l'élévation de la pression interne, caractérisé en ce que ledit dispositif est constitué d'un premier moyen autorisant la sortie des gaz (12, 13) à l'extérieur dudit dudit conteneur (2) en cas d'élévation de la pression interne, coopérant avec un deuxième moyen de maintien (18, 24, 25) dudit faisceau à l'intérieur dudit conteneur (2) agencé de manière à créer, entre ledit faisceau (4) et la paroi interne dudit conteneur (2) ou à l'intérieur dudit faisceau, un espace (20) coaxial audit faisceau pour la collecte des gaz et leur acheminement à proximité dudit premier moyen.

Ce générateur est habituellement de forme cylindrique, généralement à base circulaire mais non nécessairement, et les électrodes sont spiralées sous forme d'un faisceau électrochimique cylindrique ou bobineau.

Selon une première forme d'exécution de l'invention, ledit deuxième moyen consiste en un dispositif de confinement dudit faisceau à l'intérieur dudit conteneur, perméable aux gaz, et agencé de manière à créer entre la surface externe dudit faisceau et la paroi interne dudit conteneur un espace mettant en communication au moins une partie de ladite surface externe et ledit dispositif d'évacuation.

Ledit dispositif de confinement peut consister en une enveloppe perforée enserrant le faisceau, laissant ainsi passer les gaz.

Ainsi, selon l'invention on construit le générateur dans une double enveloppe. L'enveloppe interne n'est pas étanche. Elle possède sur toute sa surface par exemple des orifices destinés à permettre aux gaz de se libérer dans un volume libre, en relation avec la partie de l'enveloppe externe possédant un évent de sécurité.

L'enveloppe interne a en outre la fonction de maintenir le faisceau constitué des électrodes et du séparateur enroulés. Cette fonction assure le bon fonctionnement du générateur, en maintenant une pression mécanique qui assure le maintien des électrodes en contact l'une contre l'autre au travers du séparateur, donc la continuité électrique. La forme et le nombre des évidements, l'épaisseur de l'enveloppe sont choisis de façon à respecter un compromis entre résistance mécanique et facilité d'évacuation des gaz.

En outre, le fait d'avoir une enveloppe interne simple de ce type peut permettre d'améliorer la pression mécanique exercée sur le faisceau. En effet, le diamètre du bobineau doit être légèrement inférieur à celui du diamètre interne de l'enveloppe le contenant, pour permettre une introduction facile, ce qui limite la pression exercée. Dans le procédé selon l'invention, il est aisé d'effectuer un rétreint de l'enveloppe contenant le bobineau, selon le diamètre, dans un outil adéquat, de façon à exercer une pression mécanique sur le bobineau. Il est par contre beaucoup plus difficile d'effectuer cette opération sur une enveloppe externe de l'art antérieur, qui comprend les coupelles de fermeture, les bornes et l'évent de sécurité.

L'enveloppe externe (enveloppe de l'art antérieur) a pour fonction essentielle d'assurer l'étanchéité du générateur. Elle comprend les bornes de sorties isolées, et les dispositifs de sécurité comme l'évent cité plus haut. Par rapport à la situation antérieure, elle n'a plus à assurer le maintien mécanique des électrodes, puisque cette fonction est assurée par l'enveloppe interne. Ainsi, sa résistance mécanique peut être plus faible, ce qui est favorable pour des raisons de sécurité : si l'éclatement de l'enveloppe devait intervenir malgré tout, les effets en seraient diminués. Elle peut par exemple être en matière plastique, ce qui présente un intérêt pour diminuer la masse de l'accumulateur, ainsi que le coût. Si la matière plastique est choisie judicieusement, celle-ci peut fondre par exemple à une température plus basse que celle à laquelle interviennent des réactions exothermiques dangereuses, tout en restant supérieure aux conditions d'utilisation maximum (exemple 130°C), évitant ainsi tout risque d'explosion de l'enveloppe. Cette propriété est utile lorsque l'échauffement est créé par une source de chaleur extérieure.

On peut prévoir une fragilisation mécanique de l'enveloppe extérieure (par exemple par un amincissement le long d'une génératrice) de sorte que dans un cas extrême d'éclatement de l'enveloppe, les effets produits sur l'environnement soient amoindris.

De façon à maintenir la position de l'enveloppe interne stable par rapport à l'enveloppe externe, il est avantageux que le dispositif de maintien comprenne un système d'entretoises, disposées entre le dispositif de confinement du faisceau et la paroi interne du conteneur, qui n'entrave pas la circulation des gaz dans l'espace créé entre les deux enveloppes. De manière que l'espace libre soit uniformément réparti, les enveloppes doivent être coaxiales.

Les entretoises peuvent comprend des bagues radiales perforées et/ou des entretoises longitudinales. Les unes et les autres peuvent faire partie intégrante du dispositif de confinement constitué par l'enveloppe interne, par exemple sous forme de plis radiaux ou longitudinaux de la tôle perforée constituant l'enveloppe. En remplacement ou en complément d'un entretoisement extérieur du faisceau, le dispositif du maintien du faisceau peut comprendre un mandrin central et des moyens de solidarisation des extrémités du mandrin à des coupelles de fermeture frontale du conteneur.

L'enveloppe interne peut être métallique ou plastique, réalisées sous forme de tôle ou de grille, avec des ouvertures de forme quelconque. La mise en place de l'enveloppe peut être facilitée si elle est constituée par une gaine thermorétractable perforée.

Selon une forme d'exécution de l'invention, ledit dispositif de confinement et ledit conteneur sont connectés à deux polarités opposées, un film isolant étant prévu sur la surface interne dudit conteneur.

Quoique l'invention soit particulièrement avantageuse pour les générateurs cylindriques à base circulaire, mais n'est cependant pas limitée à cette seule application.

On notera que, malgré la présence de deux enveloppes, la solution conforme à l'invention n'est pas nécessairement plus lourde que celles de l'art antérieur dans la mesure où la séparation des fonctions dévolues à chacune des deux enveloppes fait qu'on peut diminuer fortement l'épaisseur de l'enveloppe extérieure, et que l'enveloppe intérieure est ajourée.

Lorsque le dysfonctionnement du générateur conduit à une combustion localisée, des gaz sont générés sur une zone de la surface des électrodes qui peut se trouver au coeur de l'épaisseur du faisceau d'électrodes. L'évacuation de ces gaz est alors particulièrement lente et difficile, notamment dans le cas des générateurs de forte capacité dont le diamètre est grand. Afin d'éviter l'accumulation de gaz dans le faisceau qui risquerait de provoquer une expulsion violente, on installe à proximité du site de dégagement un moyen destiné à recueillir ces gaz et à les conduire jusqu'au dispositif d'évacuation.

Selon une deuxième forme d'exécution de l'invention, ledit deuxième moyen consiste en au moins une structure creuse perméable aux gaz ayant la forme d'un cylindre coaxial audit faisceau, agencée de manière à créer dans l'épaisseur dudit faisceau un espace mettant en communication au moins une partie de la surface desdites électrodes et ledit dispositif d'évacuation. Ainsi l'espace libre est uniformément réparti selon une symétrie radiale au coeur même du faisceau.

Cette structure peut être réalisée en matériau isolant comme une matière plastiquer Si on désire en outre améliorer les échanges thermiques au sein du faisceau, on choisit une structure métallique qui est reliée à l'une des polarités. Le nombre de structure à insérer dans le faisceau et/ou leur épaisseur dépend de l'effet recherché et de la dimension du faisceau (énergie spécifique).

Selon un mode particulier de réalisation, ladite structure est un cylindre à double paroi entre lesquelles est ménagé un espace communicant avec ledit dispositif d'évacuation.

Selon une variante, ladite structure comprend une paroi lisse et une paroi ondulée longitudinalement selon une symétrie cylindrique. Par exemple les ondulations rentrantes (concaves) de la paroi externe peuvent être fixées à la paroi interne et l'espace libre est alors constitué par le volume compris entre les ondulations sortantes (convexes) de la paroi externe et la paroi inteme. Le pas de l'ondulation doit être assez faible pour conférer à la structure la rigidité nécessaire.

Avantageusement ledit faisceau est divisé en au moins deux sous-faisceaux encadrant ladite structure. La mise en place de la structure se trouve ainsi facilitée. Les sous-faisceaux sont spiralés séparément, ladite structure jouant le rôle de mandrin pour le sous-faisceau qui lui est extérieur. La structure doit donc pouvoir opposer une résistance suffisante à la pression lors du spiralage du sous-faisceau externe. Si le diamètre du faisceau électrochimique est important, on peut y insérer plusieurs structures en divisant le faisceau en autant de sous-faisceaux que nécessaire.

Selon une autre forme d'exécution de l'invention, le générateur comporte en outre un mandrin creux perméable aux gaz placé au centre dudit faisceau.

Selon une variante, le générateur comporte en outre des moyens de solidarisation des extrémités dudit mandrin à des coupelles de fermeture frontale dudit conteneur.

L'invention s'applique notamment à un générateur à électrolyte organique non aqueux, notamment au lithium, comprenant une électrode positive dont la matière électrochimiquement active est un oxyde lithié d'au moins un métal de transition, par exemple LiNiO₂, LiMn₂O₄, LiCoO₂, ou leurs mélanges.

L'invention s'applique plus particulièrement à un générateur au lithium dit "lithium-ion", dont les électrodes négatives comprennent un matériau d'insertion du lithium comme matière électrochimiquement active. Ce générateur comprend une électrode négative dont la matière électrochimiquement active est un matériau carboné susceptible d'insérer du lithium dans sa structure choisi parmi le graphite, le coke, le noir de carbone, un carbone amorphe, le carbone vitreux, et leurs mélanges.

D'autres caractéristiques et avantages de l'invention ressortiront de la description suivante. Il sera fait référence aux dessins annexés sur lesquels :
- la figure 1 est un schéma en perspective d'un bobineau de générateur auquel s'applique la première forme de réalisation de l'invention,
- la figure 2 est un schéma en perspective d'une enveloppe interne du bobineau permettant la circulation du gaz conformément à la première forme d'exécution de l'invention,
- la figure 3 est une vue en coupe longitudinale partielle d'un générateur faisant application de la première forme d'exécution de l'invention,
- la figure 4 montre en vue de face une entretoise d'enveloppe interne utilisée dans le mode de réalisation de la figure 3,
- la figure 5 est une vue en coupe longitudinale partielle d'un générateur faisant application de la deuxième forme d'exécution de l'invention,
- la figure 6 montre en coupe la structure utilisée dans la forme d'exécution de la figure 5,
- la figure 7 est une vue en perspective partielle d'une enveloppe interne de bobineau modifiée selon une variante de la première forme d'exécution de l'invention,
- la figure 8 est une vue en coupe analogue à la figure 3 d'un générateur faisant application d'une variante de la deuxième forme d'exécution de l'invention.

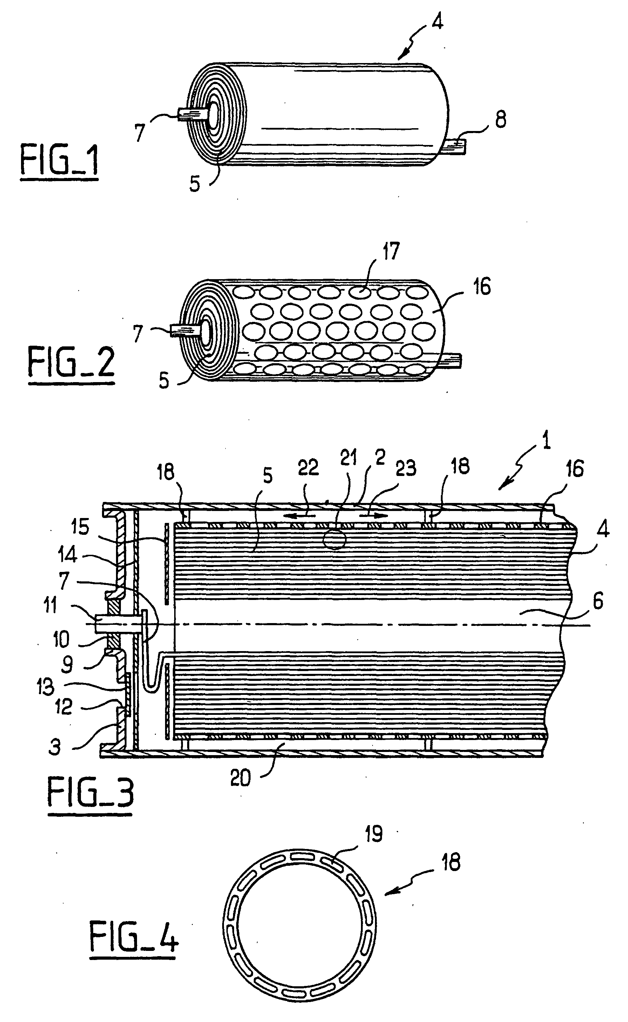

La figure 3 montre en coupe un générateur 1 comportant une enveloppe cylindrique externe ou conteneur 2 fermé à ses deux extrémités par une coupelle 3 soudée à la paroi intérieure de l'enveloppe 2. Le conteneur 2 renferme le faisceau électrochimique ou bobineau 4 constitué d'un enroulement d'électrodes 5 spiralées autour d'un puits central 6. Aux deux extrémités du bobineau 4 (cf. figure 1), sont prévues des connexions respectivement négative 7 (disposée généralement vers le centre du bobineau) et positive 8 (disposée généralement vers la périphérie du bobineau).

La coupelle 3 comporte en son centre un orifice à rebord 9 permettant de loger et fixer, par l'intermédiaire d'un anneau isolant 10 ( par exemple en verre), une borne 11 de sortie de courant du générateur, reliée électriquement à la connexion négative 7 du bobineau 4.

La coupelle 3 comporte également un dispositif d'évacuation des gaz constitué par un évent de sécurité 12 fermé en régime normal par un opercule 13 qui peut se rompre en cas de surpression interne au-delà d'un seuil prédéterminé.

Des rondelles isolantes 14 et 15, autocentrées par le conteneur 2 ou la borne 11, isolent les divers éléments entre eux.

Conformément à l'invention, le bobineau 4 est maintenu à une certaine distance de la paroi interne du conteneur 2 grâce à une enveloppe cylindrique interne de confinement 16 entourant le bobineau 4 et laissant passer les gaz, par perméabilité, porosité ou de préférence grâce à des perforations multiples 17 réparties sur sa périphérie. L'enveloppe inteme 16 peut être métallique, comme l'enveloppe externe 2, ce qui favorise les échanges thermiques avec le milieu ambiant. Elle peut aussi être en matière plastique.

L'espacement entre l'enveloppe interne 16 et le conteneur 2 peut être obtenu par des bagues entretoises 18 disposées radialement de place en place. Comme le montre la figure 4, ces bagues d'entretoisement et de centrage 18 sont elles-mêmes perforées par des trous 19 pour permettre la circulation des gaz dans l'espace annulaire 20 laissé entre l'enveloppe interne 16 et le conteneur 2.

De la sorte, s'il se développe dans une zone de réaction initiale 21 du conteneur une réaction génératrice de gaz, ceux-ci peuvent s'échapper dans et par l'espace annulaire 20 pour gagner, selon les flèches 22 et 23, les extrémités du conteneur 2 et s'échapper par l'évent de sécurité 12, 13.

Les bagues 18 sont en nombre suffisant pour assurer le maintien correct du bobineau 4, mais minimal pour ne pas alourdir l'ensemble. Trois bagues seront généralement utilisées pour des petits diamètres de bobineau ; un nombre plus élevé sera utilisé pour avoir un ensemble plus rigide si les diamètres sont plus grands.

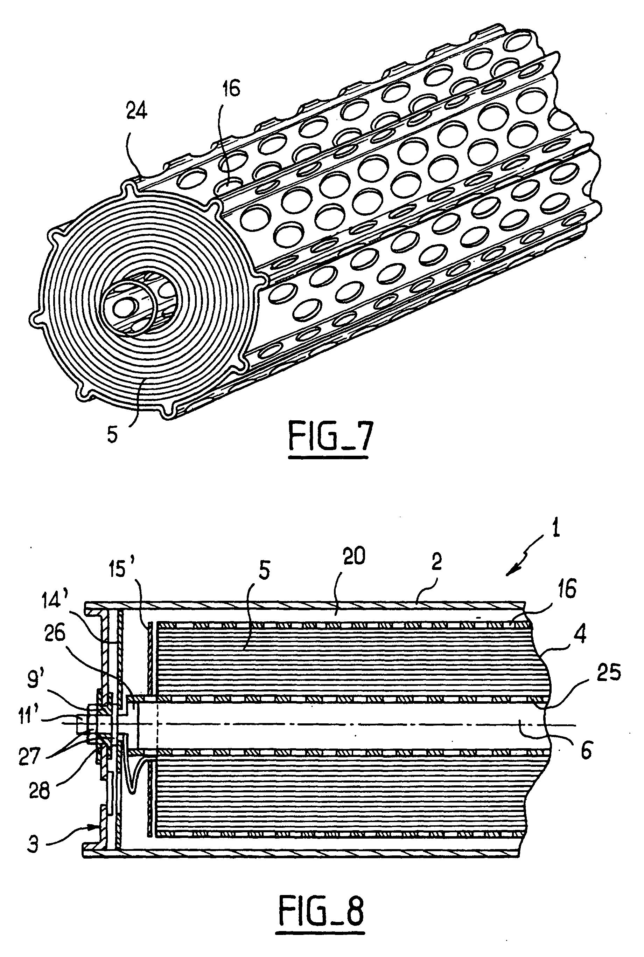

Au lieu d'un centrage par bagues radiales, une variante du premier mode de réalisation, illustrée sur la figure 7, prévoit des entretoises longitudinales réparties circonférentiellement autour de l'enveloppe interne 16. Ces entretoises peuvent avantageusement faire partie intégrante de l'enveloppe 16 elle-même, en étant réalisées par des nervures longitudinales extérieures 24 de l'enveloppe 16.

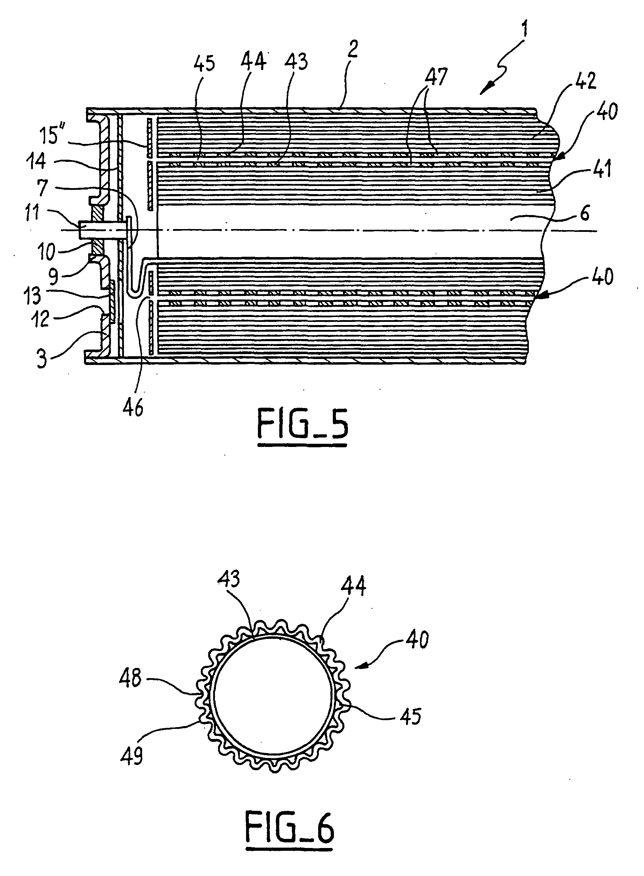

La figure 5 illustre une autre forme d'exécution de l'invention dans laquelle le moyen permettant la collecte des gaz en vue de leur évacuation est constitué par une structure cylindrique creuse 40. La structure 40 divise le faisceau électrochimique en un demi-faisceau interne 41 et un demi-faisceau externe 42. La structure 40 est formée d'une paroi interne 43 et d'une paroi externe 44 qui définissent un espace 45 pour la collecte et l'acheminent des gaz vers l'évent 12. Afin de faciliter cet acheminement, la rondelle isolante 15", autocentrée par le conteneur 2, comporte de préférence des perforations 46 avantageusement situées au droit de la structure 40. Les parois 43, 44 laissent passer les gaz, par perméabilité, porosité ou de préférence grâce à des perforations multiples 47 réparties sur leur périphérie.

Selon la variante représentée sur la figure 6, la paroi externe 44 est ondulée alors que la paroi interne 43 est lisse. Afin de conférer à la structure 40 une plus grande rigidité, les ondulations 48 dont la convexité est tournée vers l'intérieur sont solidarisées à la paroi interne 43, par exemple par collage ou soudure, et les ondulations 49 dont la convexité est tournée vers l'extérieur délimite l'espace 45 sous forme de canaux longitudinaux parallèles.

Les figures 7 et 8 montrent une autre forme d'exécution de l'invention, selon lequel le bobineau 4 n'est plus centré et maintenu dans le conteneur 2 par l'extérieur de l'enveloppe interne perforée 16, mais pas l'intérieur du bobineau 4. Plus précisément, le bobineau 4 est enroulé autour d'un mandrin creux 25 définissant le puits central 6. Le mandrin creux 25, réalisé par exemple sous forme d'un tube perforé, dépasse de chaque côté de l'enroulement 4 et est solidaire d'une base annulaire 26 de la borne modifiée 11', fixée à la coupelle 3 par deux rondelles de serrage 27 serrant un joint isolant 28 dont les deux lèvres recouvrent les bords du trou central 9' de la coupelle 3. De cette manière, le mandrin 25, et donc le bobineau 4 qu'il porte, est fixé aux deux coupelles 3, c'est-à-dire qu'il est fixé dans le conteneur 2 en maintenant l'espace annulaire 20 de circulation de gaz. La figure 8 montre aussi deux rondelles autocentrées isolantes 14' et 15'; de plus, comme la borne 11' est solidaire du mandrin 25, celui-ci est au moins partiellement réalisé en matériau isolant pour éviter la mise en court-circuit.

Selon une variante non représentée, le bobineau 4 est enroulé autour du mandrin creux 25 et comprend une structure 40 au sein du faisceau qui est maintenu comme décrit précédemment.

Selon une autre variante non représentée, le bobineau 4 est enroulé autour du mandrin creux 25 et comprend une structure 40 au sein du faisceau et une enveloppe interne perforée 16.

Selon une variante particulière de l'invention, qu'on peut combiner aux modes de réalisation des figures 3, ou 8, l'enveloppe interne 16 est connectée électriquement (par exemple par contact avec le demier tour du bobineau 4 constitué du support d'électrode seulement) à une polarité (par exemple négative, s'il est en cuivre, nickel ou acier nickelé, etc.). Le conteneur 2, métallique également, est relié à l'autre polarité (par exemple positive, s'il est en aluminium). Entre l'enveloppe interne 16 et le conteneur 2, sur la surface interne du conteneur, est prévu un film mince isolant (en polyéthylène par exemple) qui, sans réduire notablement l'espace 20 dévolu à la collecte des gaz, permet d'éviter un court-circuit en cas de déformation légère d'une des enveloppes 16, 2.

Pour des raisons de sécurité, les entretoises sont de préférence en matériau isolant. L'avantage est que, en cas de court-circuit créé par un écrasement ou un percement du conteneur par une pièce métallique, le courant sera dérivé par le contact entre les deux enveloppes, ce qui permet d'éviter un échauffement dangereux au niveau des électrodes.

De manière analogue la structure 40 de la figure 3 et/ou le mandrin 25 peuvent avantageusement être constitués d'un matériau métallique afin de contribuer au transport et à l'élimination des calories produites dans le bobineau 4. Par exemple la structure 40 peut être constituée d'aluminium et reliée à la polarité positive. des électrodes qui l'encadrent.

## Revendications

1. Générateur électrochimique étanche à électrolyte non-aqueux comprenant un conteneur (2) contenant un faisceau électrochimique spiralé (4) et au moins un dispositif de sécurité en cas de disfonctionnement provoquant l'élévation de la pression interne, **caractérisé en ce que** ledit dispositif est constitué d'un premier moyen autorisant la sortie des gaz (12, 13) à l'extérieur dudit dudit conteneur (2) en cas d'élévation de la pression interne, coopérant avec un deuxième moyen de maintien (18, 24, 25) dudit faisceau à l'intérieur dudit conteneur (2) agencé de manière à créer, entre ledit faisceau (4) et la paroi interne dudit conteneur (2) ou à l'intérieur dudit faisceau, un espace (20) coaxial audit faisceau pour la collecte des gaz et leur acheminement à proximité dudit premier moyen.

2. Générateur selon la revendication 1, dans lequel ledit deuxième moyen consiste en un dispositif de confinement dudit faisceau à l'intérieur dudit conteneur perméable aux gaz et agencé de manière à créer entre la surface externe dudit faisceau et la paroi interne dudit conteneur un espace mettant en communication au moins une partie de ladite surface externe et ledit dispositif d'évacuation.

3. Générateur selon la revendication 2, **caractérisé en ce que** ledit dispositif de confinement consiste en une enveloppe perforée enserrant le faisceau.

4. Générateur selon l'une des revendications 2 et 3, dans lequel ledit espace est maintenu par des entretoises disposées entre le dispositif de confinement du faisceau et la paroi interne du conteneur.

5. Générateur selon la revendication 4, **caractérisé en ce que** les entretoises comprennent des bagues radiales perforées.

6. Générateur selon la revendication 4, **caractérisé en ce que** les entretoises comprennent des entretoises longitudinales.

7. Générateur selon l'une des revendications 5 et 6, **caractérisé en ce qu'**au moins certaines des entretoises font partie intégrante du dispositif de confinement du faisceau.

8. Générateur selon l'une des revendications 2 à 7, dans lequel ledit dispositif de confinement et ledit conteneur sont connectés à deux polarités opposées, un film isolant étant prévu sur la surface interne dudit conteneur.

9. Générateur selon la revendication 1, dans lequel ledit deuxième moyen consiste en au moins une structure rigide creuse, perméable aux gaz, ayant la forme d'un cylindre coaxial audit faisceau, agencée de manière à créer dans l'épaisseur dudit faisceau un espace mettant en communication au moins une partie de la surface desdites électrodes et ledit dispositif d'évacuation.

10. Générateur selon la revendication 9, dans lequel ladite structure est un cylindre à double paroi entre lesquelles est ménagé un espace communicant avec ledit dispositif d'évacuation.

11. Générateur selon la revendication 10, dans lequel ladite structure comprend une paroi lisse et une paroi ondulée longitudinalement selon une symétrie cylindrique.

12. Générateur selon l'une des revendications 9 à 11, dans lequel ledit faisceau est divisé en au moins deux sous-faisceaux encadrant ladite structure.

13. Générateur selon l'une des revendications 2 à 12, comportant en outre un mandrin creux perméable aux gaz placé au centre dudit faisceau.

14. Générateur selon la revendication 14, comportant en outre des moyens de solidarisation des extrémités dudit mandrin à des coupelles de fermeture frontale dudit conteneur.

15. Générateur selon l'une des revendications 1 à 14, comprenant une électrode positive dont la matière électrochimiquement active est un oxyde lithié d'au moins un métal de transition.

16. Générateur selon l'une des revendications 1 à 15, comprenant une électrode négative dont la matière électrochimiquement active est un matériau carboné susceptible d'insérer du lithium dans sa structure choisi parmi le graphite, le coke, le noir de carbone, un carbone amorphe, le carbone vitreux, et leurs mélanges.

## Claims

1. A sealed non-aqueous electrolyte electrochemical cell comprising a container (2) containing a spiral-wound electrochemical group (4) and at least one safety device for the event of a malfunction causing a rise in internal pressure, the cell being **characterized in that** said safety device is constituted by gas vent first means (12, 13) allowing gas to escape to the outside of said container (2) in the event of internal pressure rising, co-operating with holding second means (18, 24, 25) for holding said group inside said container (2) and organized so as to create, between said group (4) and the inner wall of said container (2) or inside said group, a gap (20) coaxial with said group to collect the gas and to convey it to the vicinity of said first means.

2. A cell according to claim 1, in which said second means consist in a device for containing said group inside said gas-permeable container and organized in such a manner as to create between the outer surface of said group and the inner wall of said container a gap that puts at least a portion of said outer surface into communication with said vent device.

3. A cell according to claim 2, **characterized in that** said confinement device consists in a perforated envelope enclosing the group.

4. A cell according to claim 2 or 3, in which said gap is maintained by spacers disposed between the group confinement device and the inner wall of the container.

5. A cell according to claim 4, **characterized in that** the spacers comprise perforated radial rings.

6. A cell according claim 4, **characterized in that** the spacers comprise longitudinal spacers.

7. A cell according to claim 5 or 6, **characterized in that** at least some of the spacers are integrally formed with the group-confinement device.

8. A cell according to any one of claims 2 to 7, in which said confinement device and said container are connected to two opposite poles, an insulating film being provided on the inside surface of said container.

9. A cell according to claim 1, in which said second means consist in at least one hollow ridge structure that is permeable to gas, in the form of a cylinder that is coaxial with said group, and organized in such a manner as to create in the thickness of said group a gap that puts at least a portion of the surface of said electrodes into communication with said vent device.

10. A cell according to claim 9, in which said structure is a double-walled cylinder between which there is provided a gap that is in communication with said vent device.

11. A cell according to claim 10, in which said structure comprises a smooth wall and a wall that is corrugated longitudinally with cylindrical symmetry.

12. A cell according to any one of claims 9 to 11, in which said group is subdivided into at least two subgroups on either side of said structure.

13. A cell according to any one of claims 2 to 12, further including a hollow mandrel permeable to gas that is placed in the center of said group.

14. A cell according to claim 13, further including means for securing the ends of said mandrel to end closure cups of said container.

15. A cell according to any one of claims 1 to 14, including a positive electrode whose electrochemically active material is a lithium-containing oxide of at least one transition metal.

16. A cell according to any one of claims 1 to 15, comprising a negative electrode whose electrochemically active material is a carbon-containing material capable of inserting lithium into its structure, and selected from graphite, coke, carbon black, amorphous carbon, vitreous carbon, and mixtures thereof.

## Patentansprüche

1. Dichter elektrochemischer Generator mit nichtwässrigem Elektrolyten, der einen Behälter (2), der ein spiralförmiges elektrochemisches Bündel (4) und wenigstens eine Sicherungsvorrichtung für den Fall einer Funktionsstörung enthält, die einen Anstieg des Innendrucks hervorruft, **dadurch gekennzeichnet, dass** die Vorrichtung gebildet ist durch eine erste Einrichtung, die den Austritt der Gase (12, 13) aus dem Behälter (2) im Fall eines Anstieg des Innendrucks erlaubt, die mit einer zweiten Einrichtung zum Halten (18, 24, 25) des Bündels innerhalb des Behälters (2) zusammenwirkt, die eingerichtet ist, um zwischen dem Bündel (4) und der Innenwand des Behälters (2) oder im Innern des Bündels einen zu dem Bündel (20) koaxialen Raum (20) zum Sammeln der Gase und ihrer Heranführung an die erste Einrichtung zu bilden.

2. Generator nach Anspruch 2, **dadurch gekennzeichnet, dass** die zweite Einrichtung durch eine Vorrichtung zum Einschließen des Bündels im Innern des Behälters gebildet ist, die für die Gase durchlässig ist und eingerichtet ist, um zwischen der Außenfläche des Bündels und der Innenwand des Behälters einen Raum zu schaffen, der wenigstens einen Bereich der Außenfläche und die Abführungsvorrichtung in Verbindung setzt.

3. Generator nach Anspruch 2, **dadurch gekennzeichnet, dass** die Vorrichtung zum Einschließen aus einer durchbrochenen Hülle gebildet ist, die das Bündel einspannt.

4. Generator nach einem der Ansprüche 2 und 3, bei dem der Raum durch Streben offen gehalten wird, die zwischen der Vorrichtung zum Einschließen des Bündels und der Innenwand des Behälters angeordnet sind.

5. Generator nach Anspruch 4, **dadurch gekennzeichnet, dass** die Streben durchbrochene radiale Ringe umfassen.

6. Generator nach Anspruch 4, **dadurch gekennzeichnet, dass** die Streben Längsstreben umfassen.

7. Generator nach einem der Ansprüche 5 und 6, **dadurch gekennzeichnet, dass** wenigstens bestimmte der Streben integraler Bestandteil der Vorrichtung zum Einschließen des Bündels sind.

8. Generator nach einem der Ansprüche 2 bis 7, **dadurch gekennzeichnet, dass** die Vorrichtung zum Einschließen und der Behälter mit zwei entgegengesetzten Polen verbunden sind, und dass ein Isolationsfilm an der Innenfläche des Behälters vorgesehen ist.

9. Generator nach Anspruch 1, bei dem die zweite Einrichtung durch wenigstens eine gasdurchlässige hohle steife Struktur gebildet ist, die die Form eines zu dem Bündel koaxialen Zylinders hat und eingerichtet ist, um in der Dicke des Bündels einen Raum zu schaffen, der wenigstens einen Bereich der Oberfläche der Elektroden und die Abführungsvorrichtung in Verbindung setzt.

10. Generator nach Anspruch 9, bei dem die Struktur ein Zylinder mit doppelten Wänden ist, zwischen ein Raum geschaffen ist, der mit der Abführungsvorrichtung verbunden ist.

11. Generator nach Anspruch 10, bei dem die Struktur eine glatte Wand und eine zylindersymmetrisch längsgewellte Wand umfasst.

12. Generator nach einem der Ansprüche 9 bis 12, bei dem das Bündel wenigstens in zwei die Struktur umrahmende Unterbündel unterteilt ist.

13. Generator nach einem der Ansprüche 2 bis 12, ferner mit einem in der Mitte des Bündels angeordneten, für die Gase durchlässigen hohlen Dorn.

14. Generator nach Anspruch 13, ferner mit Einrichtungen zum verbinden der Enden des Dorns mit Schalen zum frontalen Verschließen des Behälters.

15. Generator nach einem der Ansprüche 1 bis 14, mit einer positiven Elektrode, deren elektrochemisch aktives Material ein lithiumhaltiges Oxid wenigstens eines Übergangsmetalls ist.

16. Generator nach einem der Ansprüche 1 bis 15, mit einer negativen Elektrode, deren elektrochemisch aktives Material ein kohlenstoffhaltiges Material ist, das in der Lage ist, Lithium in seiner Struktur einzubauen, und das unter Graphit, Koks, Ruß, einem amorphen Kohlenstoff, Glaskohle und Gemischen von diesen ausgewählt ist.
